(19) **Europäisches Patentamt European Patent Office Office européen des brevets**

(11) **EP 4 763 889 A1**

(12) **EUROPEAN PATENT APPLICATION**

(43) Date of publication:
24.06.2026 Bulletin 2026/26

(21) Application number: 24383420.7

(22) Date of filing: 19.12.2024

(51) International Patent Classification (IPC):
**C08H 7/00** (2011.01)     **C08L 97/00** (2006.01)

(52) Cooperative Patent Classification (CPC):
**C08H 6/00; C08L 97/005**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Fundación Tecnalia Research & Innovation**
**20009 Donostia-San Sebastian, Guipuzcoa (ES)**

(72) Inventors:
- **MARTÍNEZ FILGUEIRA, Daniel**
  **20009 Donostia-San Sebastián (ES)**
- **TEJADO ETAYO, Alvaro**
  **20009 Donostia-San Sebastián (ES)**
- **GARCÍA GARRIDO, Jaime**
  **20009 Donostia-San Sebastián (ES)**
- **BARRIO ULANGA, Aitor**
  **20009 Donostia-San Sebastián (ES)**

(74) Representative: **Balder IP Law, S.L.**
**Paseo de la Castellana 93**
**5ª planta**
**28046 Madrid (ES)**

(54) **METHOD FOR MANUFACTURING WATER-SOLUBLE PHOSPHORYLATED LIGNIN AND WATER-SOLUBLE PHOSPHORYLATED LIGNIN**

(57)     The present invention refers to a method for manufacturing a phosphorylated lignin which is soluble in water at a pH range of 2 to 14. Said method comprises the efficient phosphorylation of lignin preventing the formation of undesired species, which leads to an outstanding water solubility at neutral and acidic conditions, and, preferably, the separation of the water-soluble phosphorylated lignin from the reaction medium, wherein said separation comprises acid precipitation and/or ultrafiltration and drying under specific conditions. The invention also refers to a phosphorylated lignin that is water-soluble at a pH of 2 to 14, preferably obtained by the method of the invention.

**Description**

**FIELD OF THE INVENTION**

The present invention refers to a method for manufacturing a phosphorylated lignin, preferably a phosphorylated kraft lignin, which is soluble in water at a pH range of 2 to 14. Said method comprises the efficient phosphorylation of lignin preventing the formation of undesired species which leads to an outstanding water solubility of the phosphorylated lignin at alkaline, neutral and acidic pH conditions and, after that, the preferred separation of the water-soluble phosphorylated lignin produced from the phosphorylating medium.

Said separation can be carried out by: i) dissolving the crude mixture in an aqueous solution and adjusting the pH of said solution at pH<2, resulting in the precipitation of the phosphorylated lignin; ii) recovering the precipitated phosphorylated lignin through filtration or centrifugation; iii) redissolving the recovered precipitated phosphorylated lignin in water; and iv) recovering the phosphorylated lignin through drying the solution containing the phosphorylated lignin at a temperature below 100°C.

Alternatively, the phosphorylated lignin can be separated from the crude mixture by: i') dissolving the crude mixture in water; ii') concentrating the phosphorylated lignin through ultrafiltration to obtain a product with a high purity; and iii') optionally, drying the recovered phosphorylated lignin at a temperature below 100°C to obtain a dry product with a high purity.

The present invention also refers to a phosphorylated lignin which is water-soluble within a pH range of 2 to 14, preferably obtained by the method described herein. The water solubility in acid, neutral and alkaline pH conditions, makes the phosphorylated lignin of the invention particularly useful for a broad range of new applications such as cosmetics, hydrogels, sizing agents, water-based adhesives or water-based coatings, to name a few, in addition to conventional ones such as the manufacturing of flame retardants, polymeric resins, antimicrobials, adhesion promoters or fertilizers.

**BACKGROUND OF THE INVENTION**

Despite the wide availability of lignin worldwide, particularly of kraft lignin (KL), and its huge potential in multitude of applications, its actual use in manufacturing value-added materials is very minor, and this is mainly due to its low water solubility in neutral and acidic conditions.

It is well stated that lignin is fully soluble in water only under alkaline conditions (typically pH>10), wherein the deprotonation of the ubiquitous hydroxyl groups, particularly the phenolic groups, causes an increase in the anionic charge density along the complex polymeric structure that leads first to its disaggregation and finally to its solubilization. Reversely, as the pH of the lignin alkaline solution is lowered, intermolecular and intramolecular interactions (H bonds, $\pi$-$\pi$, Van der Walls, etc.) are generated which cause molecular aggregation and precipitation of the lignin. For this reason, lignin does not solubilize in neutral or acid conditions unless the above-mentioned interactions are avoided. In the prior art, the solubilization of lignin and, particularly of kraft lignin, has been achieved by sulfonation. Through this type of reactions, $SO_3$ groups are introduced into the chemical structure of lignin, which get deprotonated ($pK_{a1}<0$ y $pK_{a2} = 1.92$) under neutral or acid conditions, so that the anionic charge density is sufficiently high to prevent lignin aggregation. However, the conditions typically required to sulfonate lignin, i.e., high concentration of sulfuric acid, high temperature (>100°C) and long reaction times, make the industrialization of such strategy economically unattractive.

The preparation of lignosulfonates from fractionated kraft lignin by sulfonation with different amounts of sulfuric acid has been disclosed in the scientific literature. In Choi C.S., et al. (2019) "Preparation of lignosulfonates from kraft lignin by sulfonation", Journal of Korea TAPPI, Vol. 51, No. 6, 59-67, the authors used the acetone soluble fraction of a kraft lignin, having a molecular weight (Mw) of 3600-4000 g/mol, to carry out the sulfonation with sulfuric acid at 140°C for 1 hour. The best result was obtained with a $H_2SO_4$ concentration of 7.5 %, where 52 % of the sulfonated lignin was water-soluble.

Gao W., et al. (2019) "Sulfonation of phenolated kraft lignin to produce water-soluble products", Journal of Wood Chemistry and Technology, 0, 1-17 discloses the solubilization of softwood kraft lignin through a phenolation reaction (14 mol phenol/ mol lignin and 50 mL of a 60 wt.% $H_2SO_4$ dissolution at 80°C for 4 hours) followed by sulfonation (29 mol $H_2SO_4$/ mol lignin, 130°C for 1 hour). Under these harsh conditions, the solubilization of kraft lignin in a pH range of 1 to 14 was achieved.

The sulfonation of softwood kraft lignin with sulfuric acid and sodium sulfite treatments has been also reported in Inwood J.P.W., et al. (2018) "Production of sulfur containing Kraft lignin products", BioResources, 13(1), 53-70. According to this prior art, the best result was obtained using sodium sulfite (0.67 mol $Na_2SO_3$/ mol lignin, 90°C for 4h), where the treated sample was soluble under alkaline and neutral solutions. Very limited water solubility was obtained via sulfonation with sulfuric acid.

On the other hand, phosphorylation of different types of lignin has been reported in the literature, mainly related with the provision of biobased flame retardants. These processes typically use halogenated phosphates, organic solvents and require very long reaction times, which render them economically unappealing towards industrial scalability. A more attractive and environmentally friendlier approach uses urea and ammonium phosphates, such as monoammonium phosphate (MAP) or diammonium phosphate (DAP), to phosphorylate lignin. These reactants, commonly used as fertilizers, are biodegradable, and mass-produced on an industrial scale at a reasonable price (250-500 $/Ton). Almost all published works on phosphorylation of lignin with urea and ammonium phosphate, however, focuses on improving the fire resistance of lignin and none of them discloses or even suggests the possibility to solubilize lignin, in particular kraft lignin, in a pH range of 2 to 14 through this type of reaction.

More specifically, the phosphorylation of lignin with phosphoric acid in the presence of urea has been disclosed in Bykov, G.L. et al. (2010), "A sorbent based on phosphorylated lignin", Russian Journal of Applied Chemistry, Vol. 83, No. 2, 316-319. That phosphorylation process comprised impregnating spruce lignin with an aqueous solution containing phosphoric acid and urea at a solid-to-liquid ratio S:L of 1:10 for 1 hour at 80°C. After that impregnation process, the samples were dried and phosphorylated by heating at a 120-170 °C for 0.5 - 2 h. Then, the phosphorylated products were washed with hot water and 0.1 N HCl. The resulting product can be used as an effective sorbent for recovering toxic metal ions form aqueous solutions.

Alalykin, R.L. et al. (2011), "Preparation of modified hydrolysis lignin and its use for filling epoxy polymers and enhancing their flame resistance", Russian Journal of Applied Chemistry, Vol. 84, No. 9, 1567-1574 discloses the reaction of hydrolysis lignin with 85 wt. % orthophosphoric acid (OPA) and urea (both reactants in a weight ratio equal to or less than 0.5 g/ g lignin) under the conditions of reactant fusion without a solvent. The phosphorylation process described therein was carried out using untreated hydrolysis lignin with a relatively high moisture content (24.27 %) as starting material. In a first step, a mixture of said hydrolysis lignin and the reactants was subjected to joint milling and mixing in a ball mill. And, in a second step, the reaction mixture was heated at various temperatures from 140-180°C for 3.0 to 6.5 hours, with evacuation to facilitate water removal. According to this prior art, the modified products obtained can be used as fire-retardant fillers for epoxy-compounds.

Gao, C. et al. (2020), "Phosphorylated kraft lignin with improved thermal stability", International Journal of Biological Macromolecules, Vol. 162, 1642-1652 discloses the phosphorylation of kraft lignin (KL) with the aim of extending its application as a flame-retardant. According to this document, the preparation of the phosphorylated KL (PKL) comprised the impregnation of kraft lignin in an aqueous solution of $NH_4H_2PO_4$ and urea at a solid-to-liquid weight ratio of 1:10. Then, the mixture was stirred for 1 hour at 70°C. After impregnation, the KL was dried at 70 °C and cured at a higher temperature from 130 °C to 170 °C for a period of time from 10 to 240 min. The PKL was then washed first with boiling water and then cold deionized water to remove loosely attached chemicals. The phosphor content in the phosphorylated KL obtained by that method was 0.95 wt.%, determined by inductively coupled plasma-atomic emission spectroscopy ICP-AES.

Karlsson, O. et al. (2022), "Phosphorylation of kraft lignin to be used as water-stable fire retardant in wood", Tenth European Conference on Wood Modification, 374-377 discloses the phosphorylation of kraft lignin so that it can be used as fire retardant in wood. One of the variants of the phosphorylation process disclosed therein comprised mixing 0.14 g of lignin with 1.02 g of urea, 0.50 g of ammonium dihydrogen phosphate and 2.5 ml 1M NaOH in 10 ml water. The mixture was dried at 100°C for 2.5 h and heated at 150°C for 2 h, which resulted in a dark foamy solid product that was mixed with 30 ml of hot water, filtered, washed with water and dried in air. It is worth noting that this document provides contradictory information, since a phosphorous content of about 2 is reported (treatment 3b), but the corresponding vibration bands of the phosphate groups (P=O, P-O, P-OH) were not detected in the FTIR analysis.

According to the abstract of Karlsson, O. et al., the phosphorylated lignin may be soluble in alkaline conditions, but no reference is made to the obtention of a water-soluble phosphorylated kraft lignin at a neutral pH, let alone at acid pH. Therefore, it can be assumed that the alleged water solubility refers to solubility in alkaline conditions. This assumption is supported by the fact that, according to the washing protocol described therein, two washing steps were carried out without the acidification of water to precipitate and recover the phosphorylated lignin. More specifically, this prior art discloses that the solid product obtained after the phosphorylation reaction was washed with hot water, filtered, washed with cold water, filtered and dried. Since the phosphorylated lignin could be recovered merely by filtering, without acidifying, it must be assumed that said phosphorylated lignin was not water-soluble.

In summary, although various chemical strategies have been previously used to modify the properties of lignin, only sulfonation processes have been shown to improve the water solubility of lignin, particularly kraft lignin, in neutral and/or acidic conditions. However, as previously mentioned, these known processes require complex reactions, harsh conditions, e.g., large amount of sulfuric acid and high temperatures (>100°C), and long reaction times. All these drawbacks make their industrialization economically unrealistic. Thus, there is still a need to develop an improved method able to produce a lignin, in particular a kraft lignin, which is water-soluble in a broad pH range (e.g., pH of 2 to 14) without the above-mentioned drawbacks.

**DESCRIPTION OF THE INVENTION**

The inventors surprisingly found that the phosphorylation of lignin, in particular kraft lignin, from a reaction mixture which is mixed without adding water or with a sufficiently low amount of water ($\leq 3$ g/g lignin), provides a phosphorylated lignin which is water-soluble, in particular at a pH of 2 to 14.

Besides, the inventors surprisingly found that a phosphorylated lignin which is water-soluble, in particular at a pH of 2 to 14, can also be obtained from an initial mixture comprising a water weight ratio higher than 3 g/g lignin, with the proviso that said initial mixture is prepared by mixing the lignin, phosphorylating agent, nitrogenated compound and, optionally, water at a temperature lower than 60 °C, preferably lower than 55°C and more preferably at room temperature (20-25 °C); and the water present in said initial mixture is at least partially evaporated at a temperature lower than 60 °C, preferably lower than 55°C, thereby obtaining a reaction mixture with a water content equal to or lower than 3 g/g lignin.

The current invention provides some important advantages in the manufacture of value-added materials derived from lignin, preferably kraft lignin, since the water solubility in acid, neutral and alkaline conditions makes the phosphorylated lignin of the invention particularly useful for a broad range of new applications such as cosmetics, hydrogels, sizing agents, water-based adhesives or water-based coatings, to name a few, in addition to conventional ones such as the manufacturing of flame retardants, polymeric resins, antimicrobials, adhesion promoters or fertilizers.

Therefore, a first aspect of the invention refers to a method for manufacturing a phosphorylated lignin, in particular a phosphorylated lignin which is water-soluble at a pH of 2 to 14, and the method comprises the following steps:

> a) providing a reaction mixture comprising lignin, a phosphorylating agent, a nitrogenated compound and, optionally, water, wherein

> - the weight ratio between the phosphorylating agent and the lignin is higher than 0.5, preferably equal to or higher than 1;
> - the weight ratio between the nitrogenated compound and the lignin is higher than 0.5, preferably equal to or higher than 2; and
> - the water content of the reaction mixture is equal to or lower than 3 g/ g lignin; and

> b) heating the reaction mixture at a temperature higher than 100 °C, preferably higher than 132 °C, more preferably higher than 145 °C, thereby obtaining a crude mixture comprising water-soluble phosphorylated lignin.

The crude mixture comprising water-soluble phosphorylated lignin obtained in step b) of the method described herein may also be water-soluble and, advantageously, it can be directly used without any further treatment. In particular, this may be advantageous, for example, for the impregnation of lignocellulosic materials, including wood, paper, board, molded cellulose or lignocellulosic fibers, to confer them new properties such as fire resistance, as the presence of the nitrogenated compound, in particular urea, in the mixture would facilitate the reaction of phosphorylated lignin with the inner parts of those elements.

However, it is preferable that the method of the invention comprises a purification treatment in order to at least partially separate the water-soluble phosphorylated lignin from unreacted reagents and other compounds present in the crude mixture. This purification treatment, in particular when carried out as described here below, helps to stabilize the phosphorylated lignin. Thus, in preferred embodiments, the method of the invention further comprises the following steps:

> c) preparing an aqueous solution by dissolving the crude mixture comprising water-soluble phosphorylated lignin obtained in step b) into water, wherein the concentration of the crude mixture is of 0.5 wt.% to 50 wt.%, preferably of 5 wt.% to 20 wt.% and more preferably of 10 wt.% to 20 wt.%, percentages referred to the weight of the crude mixture with respect to the weight of the aqueous solution;

> d) if required, adjusting the pH of the aqueous solution of step c) at a pH of 5 to 12 with an alkaline compound, preferably sodium hydroxide; and

> e) optionally isolating the water-soluble phosphorylated lignin in solid form; preferably the isolation comprises drying the aqueous solution of step d) at a temperature lower than 100°C, preferably lower than 70°C.

Water solubility is determined by spectrophotometry. In particular, water solubility at a given pH can be determined by preparing solutions of the sample to be tested in water at a concentration of about 2.5 g/L and adjusting the pH of said solutions to pH 12 and the given pH, for example, using either 1M NaOH or 1M $H_2SO_4$ solutions. The concentration of the solutions is then adjusted to about 2.0 g/L with water, stirred for about 30 min and, after that, centrifuged (11,000 rpm for 10 minutes). Finally, a portion of 100 $\mu$L of the supernatant is mixed with 2.9 mL of NaOH 0.1 M and the absorbance of the mixture is measured at 290 nm. The absorbance of each sample can be analyzed twice.

To quantify the percentage of solubility at a given pH (e.g., pH 2, 4, 6, 8 or 10), it can be considered that the lignin samples to be tested (unmodified and phosphorylated) are completely solubilized at pH 12. That means that, for any sample, the maximum absorbance possible is the absorbance of the sample at pH 12. Therefore, for each sample, the solubility at a given pH can be determined according to the following equation:

% Solubility (pH X) = (Absorbance of the sample at pH X) / (Absorbance of the sample at pH 12), wherein X corresponds to the pH were the solubility is to be determined.

It is considered that the phosphorylated lignin is water-soluble at a given pH when the recovery percentage determined as exposed above (% of solubility) is higher than 95 %, preferably higher than 99 % and, more preferably 100 %.

The moisture of the lignin used to provide the reaction mixture (step a)) in the method described herein is preferably adjusted, so that the water content in said reaction mixture is equal to or less than 3 g/g lignin. In preferred embodiments, the moisture of the lignin is equal to or less than 10 wt.%, more preferably equal to or less than 5 wt.%.

In those embodiments wherein a wet lignin (i.e., moisture higher than 10 wt.%) is to be used as starting material, prior to the preparation of the reaction mixture of step a), said wet lignin can be dried at a temperature equal to or higher than 40 °C, preferably of 40 °C to 105 °C, more preferably of 60 °C to 80 °C, so that its moisture is reduced to equal to or less than 10 wt.%, more preferably equal to or less than 5 wt.%.

As previously mentioned, one of the key features of the method of the invention is that the water content in the mixture of step a) is equal to or lower than 3 g/g lignin prior to the phosphorylation reaction. The inventors also found that, in those embodiments wherein the water content of an initial mixture comprising lignin, phosphorylating agent and nitrogenated compound as defined herein is higher than 3 g/g lignin, said initial mixture needs to be dried at a temperature lower than 60 °C, preferably lower than 55°C until the water content of the mixture (i.e., the reaction mixture) is, at least, equal to or lower than 3 g/g of lignin. Said drying process may be done, for example, in a vacuum oven. In addition, when water is present in the initial mixture, the mixing process is performed at a temperature lower than 60 °C, preferably lower than 55 °C, more preferably at room temperature (20-25 °C).

Thus, in some embodiments of the invention, step a) of the method described in this document comprises:

a-1) mixing the lignin, the phosphorylating agent, the nitrogenated compound as described herein and, optionally, water at a temperature lower than 60 °C, preferably lower than 55 °C, more preferably at room temperature (20-25 °C), thereby obtaining an initial mixture; and

a-2) drying the initial mixture at a temperature lower than 60°C, preferably lower than 55 °C, thereby obtaining a reaction mixture with a water content, at least, equal to or lower than 3 g/g of lignin.

In other embodiments of the invention, step a) of the method described herein comprises directly mixing the lignin with the phosphorylating agent and the nitrogenated compound, but without adding water. These embodiments are preferred because the reaction mixture with a water content equal to or lower than 3 g/ g lignin can be directly obtained without the need of drying.

Previously known processes using reagents such as urea and ammonium phosphate to phosphorylate lignin added water to solubilize these reactants with the aim to make easier the interaction between them and the lignin. For instance, according to the results of Gao et al. (2020), when both the mixing of lignin and the reactants (i.e., phosphorylating agent and nitrogenated compound) with water and the drying process are performed at 70 °C the phosphorus content in the phosphorylated lignin was relatively low (0.95 %) and, as a result, the water solubility at neutral/acidic conditions of the product obtained is very poor.

However, the inventors unexpectedly found that the phosphorylation reaction is much more effective when the reaction mixture is prepared without adding water or with a water content in the reaction mixture equal to or lower than 3 g/g lignin or, alternatively, when the water content in an initial mixture is higher than 3 g/g lignin but the excess water is evaporated at a temperature lower than 60 °C before the phosphorylation reaction. As a result, the phosphorylated lignin obtained from the method of the invention is water-soluble in a broad range of pH, in particular, from 2 to 14.

Different types of lignin can be phosphorylated in the method of the invention. Said lignin may be obtained from different lignocellulosic biomass resources such as softwood, hardwood or non-wood materials, in particular applying any conventional pulping method known in the art such as sulfite, kraft, organosolv or soda processes. The lignin used as starting material in the method described herein may also be hydrolysis lignin (HL).

In particular embodiments, the lignin to be phosphorylated is kraft lignin (KL), Said KL may be either hardwood or softwood, preferably is softwood kraft lignin. Exemplary types of softwood kraft lignin commonly available are, for example, spruce kraft lignin or pine kraft lignin.

The kraft lignin is obtained by the so-called kraft process, which is the most widely used method to obtain lignin from lignocellulosic biomass. In this method, biomass is typically treated with aqueous sodium hydroxide (NaOH) and sodium hydrosulfide (NaHS) to separate lignin from cellulose.

The lignin, in particular kraft lignin, used as starting material in the method for manufacturing a water-soluble phosphorylated lignin of the invention has an average molecular weight of 50000 to 1000 g/mol, preferably of 10000 to 2500 g/mol, more preferably 6000 g/mol, and/or a polydispersity index (PDI) of 6 to 1,5, preferably of 4 to 2, both parameters can be measured according to standard methods commonly used in the art to characterize lignin.

In particular embodiments of the invention, the phosphorylating agent used in the method described herein is non-halogenated, thus avoiding the environmental issues commonly associated with halogenated compounds. This phosphorylating agent may be selected from organophosphorus compound such as di- or tri-methyl phosphite, (poly) phosphoric acid, salt or derivative thereof, and combinations thereof. Thus, the phosphorylating agent may be selected from monoammonium phosphate (MAP), diammonium phosphate (DAP), phosphoric acid, polyphosphate salts, phosphonic/phosphorous acid or their salts, organic phosphates such as di- or tri-methyl phosphite, polyphosphoric acid and a combination thereof. In preferred embodiments of the invention, said phosphorylating agent is selected from monoammonium phosphate (MAP), diammonium phosphate (DAP) and a combination thereof.

The weight ratio between the phosphorylating agent and the lignin, in particular when said phosphorylating agent is selected from MAP, DAP and a combination thereof, is higher than 0.5, preferably equal to or higher than 1, more preferably of 1 to 10, still more preferably of 1 to 5, even more preferably of 1 to 2, and most preferably 1.5. An amount of phosphorylating agent equal to or lower than 0.5 g/ g lignin may not be enough to provide the level of phosphorylation required to achieve the water solubilization of the lignin in neutral and/or acid conditions. On the other hand, it is preferred a weight ratio not higher than 5 g/ g lignin in order to avoid relatively high condensation reactions of the phosphate groups incorporated in the chemical structure of lignin but also to not to increase the costs of the process.

The "nitrogenated compound" refers to a nitrogen-containing compound able to create multiple hydrogen bonds acting both as hydrogen donor and hydrogen acceptor. In preferred embodiments, the nitrogenated compound has a general formula

$$R^2\text{-}CR^1NH_2,$$

wherein

R$^1$ is selected from =O, =S and -NH$_2$, and
R$^2$ is selected from hydrogen, NH$_2$ and a C$_1$-C$_2$ alkyl chain,
with the proviso that when R$^1$ is -NH$_2$, R$^2$ is NH$_2$.

Preferably said nitrogenated compound comprises an amide or thioamide group. More preferably, the nitrogenated compound can be selected from urea, thiourea, acetamide, formamide, thioacetamide, guanidine and a combination thereof. Even more preferably said nitrogenated compound is urea.

The weight ratio between the nitrogenated compound and the lignin, in particular when said nitrogenated agent is urea, is higher than 0.5, preferably equal to or higher than 2, more preferably of 2 to 10, still more preferably of 2 to 6, even more preferably of 2.5 to 4, more preferably 3. An amount of nitrogenated compound equal to or lower than 0.5 g/ g lignin may not be enough to solubilize the lignin and phosphorylating agent in step b) of the method of the invention, while it is preferred a weight ratio not higher than 6 to reduce the costs of the process.

In those embodiments of the invention wherein no water is added in step a), the reaction mixture of step a) typically is a solid mixture which can be prepared by mixing the lignin, the phosphorylating agent and the nitrogenated compound as defined herein in a mixing device conventional in the field such as an electric mill or a mortar. In particular embodiments, the preparation of the reaction mixture comprises mixing said lignin, phosphorylating agent and nitrogenated compound in an electric mill, preferably for a period equal to or higher than 15 seconds.

According to other embodiments of the invention, however, the reaction mixture of step

a) can be prepared by dissolving the phosphorylating agent and the nitrogenated compound as defined herein in some amount of water, an amount small enough so that the water content in the mixture is equal to or less than 3 g/ g lignin. Then, lignin can be slowly added and the mixture (typically a suspension) stirred for at least 5 min, preferably for 10 minutes to 20 minutes, at a temperature lower than 60 °C, preferably lower than 55°C, more preferably at room temperature (20-25 °C).

According to other embodiments of the invention, the provision of the reaction mixture may comprise preparing an initial mixture by dissolving the phosphorylating agent and the nitrogenated compound as defined herein in some amount of water. Then, lignin can be slowly added and the mixture (typically a suspension) stirred for at least 5 min, preferably for 10 minutes to 20 minutes, at a temperature lower than 60 °C, preferably lower than 55°C, more preferably at room temperature (20-25 °C). This initial mixture is dried at a temperature lower than 60°C, preferably lower than 55 °C, thereby obtaining a reaction mixture with a water content, at least, equal to or lower than 3 g/ g lignin. The drying may be done, for example, in a vacuum oven.

In step b) of the method of the invention, the reaction mixture is heated at a temperature higher than 100 °C, preferably higher than 132 °C, more preferably higher than 132 °C to 175 °C, even more preferably of 145 °C to 170 °C. Then, the temperature of the mixture is maintained within the above range(s) until the phosphorylation reaction (also referred to as "curing" in this document) is deemed to be sufficient.

The time required for the phosphorylation reaction to be sufficient can be easily determined by the skilled person in the art, for example, by carrying out a lab-scale test at a given conditions, taking samples of the reaction mixture at different times, dissolving the reaction mixture in water, if required adjusting the pH of 5 to 12, and ultrafiltering the solution with a 1-30 kDa membrane. Thus, the phosphorylation reaction can be deemed to be sufficient when the phosphorylated lignin obtained is soluble at pH 2, the water solubility being determined as described in this document.

In preferred embodiments of the invention, in particular when the phosphorylating agent is selected from monoammonium phosphate (MAP), diammonium phosphate (DAP) and a combination thereof, and the nitrogenated compound is urea, step b) of the method of the invention comprises heating the reaction mixture at a temperature as defined herein for a period of 10 minutes to 90 minutes, preferably of 25 minutes to 75 minutes, more preferably 40 minutes to 60 minutes, even more preferably 60 minutes. Longer times may jeopardize water solubility of the phosphorylated lignin due to the condensation of the phosphate groups, which would reduce the density of ionizable groups and thus of the anionic charges responsible of lignin solubilization.

Once the water-soluble phosphorylated lignin is obtained in step b) of the method, it may be separated from the crude mixture. Said separation may be carried out by dissolving the crude mixture in an aqueous solution and separating the water-soluble phosphorylated lignin by any conventional filtration processes such as centrifugation, filtering by dialysis membranes, osmosis or ultrafiltration.

As previously mentioned in this document, the crude mixture may be directly used without any additional purification and/or treatment. However, it is preferred that the water-soluble phosphorylated lignin is at least partially separated from unreacted reagents also present in the crude mixture.

Thus, in preferred embodiments of the invention, step c) of the method described herein comprises the preparation of an aqueous solution by dissolving the crude mixture comprising water-soluble phosphorylated lignin obtained in step b) into water, wherein the concentration of the crude mixture is of 0.5 wt.% to 50 wt.%, preferably of 5 wt.% to 20 wt.% and more preferably of 10 wt.% to 20 wt.%, percentages referred to the weight of the crude mixture with respect to the weight of the aqueous solution.

This solution may be prepared adding the crude mixture to the required amount of water and stirring until dissolution is obtained. The time required to do so may vary depending on several factors such as the stirring means used. In particular embodiments, it may be of 0.5 to 5 hours, more specifically of 1 hour to 2 hours.

Once dissolution is obtained in step c), the method of the invention may comprise an optional step d) wherein the pH of the aqueous solution is adjusted at a pH of 5 to 12, preferably of 5 to 8, more preferably of 6 to 7 with an alkaline compound. Any alkaline compound can be used in this step of the method of invention. This step may not be needed, for example, when the water used to prepare the aqueous solution has a pH of 5 to 12, so that the aqueous solution of step c) already has the required pH without needing further adjustment. In those embodiments wherein urea is used as nitrogenated compound, it may act as a buffer thus maintaining the pH of the aqueous solution between 6.5 and 7.5 without the need of further adjustment.

The method of the invention may further comprise the isolation of the water-soluble phosphorylated lignin in solid form (step e)). This isolation may be done by drying the aqueous solution at a pH of 5 to 12 at a temperature of lower than 100 °C, preferably lower than 70 °C, and more preferably of 50°C to 60°C.

The pH of the aqueous solution to be dried must be of 5 to 12, preferably of 5 to 8, more preferably of 6 to 7 and, additionally, the drying must be done at a temperature lower than 100°C, preferably lower than 70°C. This is particularly important in order to avoid self-reaction upon drying at acidic pH and/or higher temperatures which might compromise phosphorylated lignin solubility in water.

In preferred embodiments of the invention, the separation of the water-soluble phosphorylated lignin from the crude mixture may comprise at least one treatment by ultrafiltration with a 1kDa to 30 kDa membrane, dialysis or osmosis. These techniques allow the concentration of the lignin in the aqueous solution, thereby increasing the purity of the product obtained. More specifically, the method may comprise the following:

c) preparing an aqueous solution by dissolving the crude mixture comprising water-soluble phosphorylated lignin obtained in step b) into water, wherein the concentration of the crude mixture is of 0.5 wt.% to 50 wt.%, percentage referred to the weight of the crude mixture with respect to the weight of the aqueous solution;

d) if required, adjusting the pH of the aqueous solution of step c) at a pH of 5 to 12, preferably of 5 to 8, more preferably of 6 to 7, with an alkaline compound, preferably sodium hydroxide;

d-1) concentrating the aqueous solution of step c) or, if applicable, step d) using ultrafiltration with a 1kDa to 30 kDa membrane, dialysis or osmosis; and

e) optionally isolating the water-soluble phosphorylated lignin in solid form by drying the concentrate phase of step d-1) at a temperature lower than 100°C, preferably lower than 70°C.

When the method includes the treatment according to these embodiments, steps c), d) and e) can be carried out as already described in this document. Besides, steps c) to d-1) can be done two of more times with the aim to increase the purity of the product obtained by the method of the invention.

The molecular weight cut-off (MWCO) of the ultrafiltration membrane depends on the starting molecular weight of the lignin used. In those particular embodiments of the invention, wherein the lignin to be phosphorylated has a molecular weight (MW) of about 6000 g/mol, the MWCO of the ultrafiltration membrane is preferable of 5 kDa to 25 kDa, more preferably of 10 kDa to 20 kDa.

In other preferred embodiments of the method of the invention, the separation of the water-soluble phosphorylated lignin from the crude mixture comprises one or more acid washings with the aim to increase the purity of the product obtained. More specifically, the method comprises the following:

c) preparing an aqueous mixture by dissolving the crude mixture comprising water-soluble phosphorylated lignin of step b) into water, wherein the concentration of the crude mixture in the aqueous mixture is of 0.5 wt.% to 50 wt.%, preferably of 5 wt.% to 20 wt.% and more preferably of 10 wt.% to 20 wt.%, percentages referred to the weight of the crude mixture with respect to the weight of the aqueous solution;

c-1) adjusting the pH of the aqueous solution of step c) to a pH lower than 2, preferably lower than 1, more preferably equal to or lower than 0.5, with an acid compound, preferably sulphuric acid, at a temperature of 10 °C to 70 °C, preferably of 10 °C to 50°C, more preferably of 20 °C to 30 °C, thereby obtaining an acidic solution;

c-2) stirring the acidic solution of step c-1) for at least 1 hour at a temperature of 10 °C to 70 °C, preferably of 10 °C to 50°C, more preferably of 20 °C to 30 °C, and separating the solid/liquid phases thereby obtained;

c-3) preparing a further aqueous solution dissolving the solid phase of step c-2) into water, wherein the concentration of the solid phase is of 0.5 wt.% to 50 wt.%, preferably of 1 wt.% to 20 wt.% and more preferably of 10 wt.% to 20 wt.%, percentages referred to the weight of the solid phase with respect to the weight of the further aqueous solution; and

d) adjusting the pH of the further aqueous solution of step c-3) at a pH of 5 to 12, preferably a pH of 5 to 8, more preferably a pH 6 to 7, with an alkaline compound, preferably sodium hydroxide; and

e) optionally isolating the water-soluble phosphorylated lignin in solid form; preferably the isolation comprises drying the aqueous solution of step d) at a temperature lower than 100°C, preferably lower than 70°C, more preferably of 50°C to 60°C.

When the method includes the acid washing treatment according to these embodiments, steps c), d) and e) can be carried out as already described herein. Particularly, an aqueous solution of the mixture to be purified can be prepared in step c) by adding the crude mixture to the required amount of water and stirring until dissolution is obtained. The time required to do so may vary depending on several factors such as the stirring means used. In particular embodiments, it may be of 0.5 to 5 hours, more specifically of 1 hour to 2 hours.

Once dissolution is obtained in step c), the method of the invention may comprise an acidification step (step c-1)), wherein the pH of the aqueous solution is adjusted to a pH lower than 2, preferably lower than 1, more preferably equal to or less than 0.5, with an acid compound at a temperature of 10 °C to 70 °C, preferably of 10 °C to 50°C, more preferably of 20 °C to 30 °C thereby obtaining an acidic solution.

Any acid compound can be used in this acidification step. In particular embodiments, the acid compound may be an inorganic acid such as $H_2SO_4$ or HCl. Preferably, the acid compound used in the method described herein is sulfuric acid, more preferably diluted sulfuric acid such as 1-5 M sulfuric acid solution.

Once the pH of the aqueous solution has been adjusted, the acidic solution is stirred (step c-2) for at least 1 hour at a temperature of 10 °C to 70 °C, preferably of 10 °C to 50°C, more preferably of 20 °C to 30 °C, so that a solid phase comprising the phosphorylated lignin is formed. Then, the method of the invention comprises the separation of these two phases (solid and liquid). Said separation can be done by conventional solid/ liquid separation process such as filtration, centrifugation, filtering by dialysis membranes, osmosis or ultrafiltration.

In step c-3), the solid phase obtained in step c-2) is dissolved into water thereby providing a further aqueous solution. This solution may be prepared adding the solid phase to the required amount of water and stirring until dissolution is obtained. The time required to do so may vary depending on several factors such as the stirring means used. In particular embodiments, it may be of 0.5 to 5 hours, more specifically of 1 hour to 2 hours.

In preferred embodiments, steps c-1) to c-3) of the method of the invention as described herein are repeated n times, n being an integer equal to or higher than 2, preferably an integer equal to or higher than 5, more preferably n is 5.

This acid washing treatment at least partially remove the amount of phosphorylated agent and nitrogenated compound present in the solid mixture obtained after the curing process. Thus, the number of acid washing treatment (n) required may depend on the particularities of each embodiment of the invention. A skilled person would easily recognise that the minimum number of said acid washing treatments can be easily established, for instance, by determining the minimum amount of nitrogen of a sample.

After the acidic washing treatment, the method of the invention comprises step d) wherein the pH of the further aqueous solution is adjusted at a pH of 5 to 12, preferably of 5 to 8, more preferably of 6 to 7 with an alkaline compound. Any alkaline compound can be used in this step of the method of invention.

In particular embodiments, said basic compound may be an inorganic alkaline compound capable of forming an alkaline or alkaline earth salt with the inorganic acid compound, preferably the inorganic acid compound is $H_2SO_4$ and the salt is sodium sulfate. Preferably, the alkaline compound used in step d) of the method described herein is sodium hydroxide, in particular, a sodium hydroxide water solution. In more preferred embodiments, the alkaline compound may be a 0.1 M to 5 M NaOH water solution, even more preferably a 1 M to 2 M NaOH water solution. The use of a sodium hydroxide aqueous solution facilitates the accuracy of the pH adjustment, whereas the use of a water solution with a NaOH within the established ranges provides an additional advantage from more diluted solutions, which implies adding an extra amount of water which unnecessary dilute the water-soluble phosphorylated lignin in the aqueous solution or, if the water-soluble phosphorylated lignin is isolated in solid form, must be removed in the next step of the method.

Thus, the water-soluble phosphorylated lignin of the invention may be obtained as an aqueous solution at a pH of 5 to 12, preferably of 5 to 8, more preferably of 6 to 7. The use of this aqueous solution may be advantageous for some applications such as, for example but not limited to, as antioxidant in cosmetic formulations, sizing agent for pulp and paper, or fire retardant additive for medium density fiberboards (MDF).

However, it is preferable to obtain the water-soluble phosphorylated lignin in solid form (step e) of the method) by drying at a temperature of lower than 100 °C, preferably lower than of 70 °C, more preferably of 50 °C to 60 °C. As previously mentioned, drying at this temperature range is particularly important in order to avoid self-reaction that may occur while drying at higher temperatures which might compromise phosphorylated lignin solubility in water.

In some embodiments of the invention, the water-soluble phosphorylated lignin obtained after the acid washing treatment as described herein may be obtained in solid form by drying the aqueous solution of step d) at a temperature a lower than 100 °C, preferably lower than of 70 °C, more preferably of 50 to 60 °C, and, additionally, the solid thus obtained may be dissolved into water in the same conditions of step c) and filtered using a membrane separation technique selected from ultrafiltration with a 1kDa to 30 kDa membrane, dialysis or osmosis. Said process of water dissolution and filtration may be repeated two of more times with the aim to minimise the amount of impurities present in the product obtained by the method of the invention.

Alternatively, after the acid washing treatment as described herein, the aqueous solution at pH 5 to 12 of step d) may be filtrated using a membrane separation technique selected from ultrafiltration with a 1kDa to 30 kDa membrane, dialysis or osmosis. This process of water dissolution (step c) of the method) and filtration using a membrane separation technique selected from ultrafiltration with a 1kDa to 30 kDa membrane, dialysis or osmosis may be repeated two of more times to increase purity of the product obtained. After that, the concentrate phase thus obtained can be dried at a temperature a lower than 100 °C, preferably lower than of 70 °C, more preferably of 50 to 60 °C. The molecular weight cut-off (MWCO) of the ultrafiltration membrane depends on the starting molecular weight of the lignin used. In those particular embodiments of the invention, wherein the lignin to be phosphorylated has a molecular weight (MW) of about 6000 g/mol, the MWCO of the ultrafiltration membrane is preferable of 5 kDa to 25 kDa, more preferably of 10 kDa to 20 kDa.

A further object of the invention provided herein is a phosphorylated lignin which is water-soluble, in particular at a pH range of 2 to 14.

Water solubility may be determined as described in this document.

In preferred embodiments, the water-soluble phosphorylated lignin is obtained or obtainable by the method as described in this document.

In addition to its solubility in a broad range of pH, the water-soluble phosphorylated lignin of the invention preferably have a high reactivity, which represent a significant improvement from other water-soluble lignin derivates such as lignosulfonates or sulfonated kraft lignin which typically have poor reactivity due to the stability of the sulfone groups.

The water-soluble phosphorylated lignin of the invention provides some important advantages in the manufacture of value-added materials derived from lignin, preferably kraft lignin, since the water solubility in acid and neutral conditions makes the phosphorylated lignin of the invention particularly useful for a broad range of new applications such as cosmetics, hydrogels, sizing agents, water-based adhesives or water-based coatings, to name a few, in addition to conventional ones such as the manufacturing of flame retardants, antimicrobials, adhesion promoters or polymeric resins.

Through the description and the claims, the word "comprises" and variations thereof are not intended to exclude other technical features, ingredients or steps. Additional advantages and features of the invention will become apparent to those skilled in the art upon examination of the description or may be learned by practice of the invention without undue burden.

## BRIEF DESCRIPTION OF THE FIGURES

Figure 1 shows the solubility of a non-phosphorylated kraft lignin (M1), water-soluble phosphorylated kraft lignin obtained by the method according to the invention (M20, M23 and M28) and phosphorylated kraft lignin obtained by a comparative method not part of the invention (M16 and M24).

Figure 2 shows the FTIR spectrum of a non-phosphorylated kraft lignin (REF), a water-soluble phosphorylated kraft lignin obtained by the method according to the invention (M23) and a phosphorylated kraft lignin obtained by a comparative method not part of the invention (M16).

Figure 3 shows the FTIR spectrum of a non-phosphorylated kraft lignin (REF), a water-soluble phosphorylated kraft lignin obtained by the method according to the invention (M23) and a water-soluble phosphorylated kraft lignin obtained by the method of the invention comprising dialysis (M23 dialysed).

Figure 4 shows the FTIR spectrum of a non-phosphorylated kraft lignin (REF) and a water-soluble phosphorylated kraft lignin obtained by the method of the invention comprising dialysis (M23 dialysed).

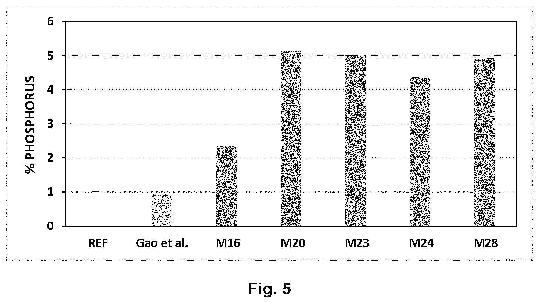

Figure 5 shows the phosphor content of phosphorylated kraft lignins obtained according to the prior art document Gao et al., water-soluble phosphorylated kraft lignin obtained by the method according to the invention (M20, M23 and M28) and phosphorylated kraft lignin obtained by a comparative method not part of the invention (M16 and M24).

## EXAMPLES

In the following, the invention will be further illustrated by means of examples and comparative examples. The examples should in no case be interpreted as limiting the scope of the invention, but only as an illustration of the invention.

Materials

Kraft lignin (KL) was softwood lignin with a molecular weight (Mw) of 6000 g/mol, ash content less than 2 wt.% and moisture of 5 wt.%. KL was used with this moisture content.

Urea had a purity of 99.5%.

Monoammonium dihydrogen phosphate (MAP) had a purity of 98%.

## EXAMPLE 1: Preparation of soluble kraft lignin according to the invention (without adding water (M23))

A solid mixture comprising 1 g of kraft lignin, 1.46 g of MAP and 3.33 g of urea was prepared by adding these compounds into a mill to mix them for 20 seconds. This reaction mixture was introduced in a furnace and maintained at 150 °C for 60 minutes.

Separation of the phosphorylated lignin: The crude mixture obtained after the phosphorylation process was taken out of the furnace, mixed with 100 mL of water and dissolved by stirring the aqueous mixture for 2 hours. Once dissolution was obtained, the pH of aqueous solution was adjusted to 0.5 with $H_2SO_4$ 2M, the resulting acidic aqueous solution was stirred for 1 hour and, after that, centrifuged at 11,000 rpm for 10 minutes. The supernatant (liquid phase) was discarded and the solid phase comprising the phosphorylated lignin was mixed with 100 mL of water. This process of dissolution-acidification-stirring-centrifugation was repeated 5 times to remove unreacted MAP and urea. The solid phase obtained after these acid treatments was dissolved in 100 mL of water and the pH of the solution thus obtained was adjusted to 7 with NaOH 1 M. Phosphorylated lignin in solid form was then obtained by drying the said aqueous solution at 50°C in a vacuum oven for 12 hours.

Due to the addition of $H_2SO_4$ and NaOH in the acid washing treatments, $Na_2SO_4$ is formed. With the aim to at least partially remove this salt, the phosphorylated lignin in solid form was dissolved in water and filtrate using an ultrafiltration equipment with a 20kDa membrane. This ultrafiltration process was carried out three times giving rise to the sample identified as M23 in this document.

Alternatively to the ultrafiltration treatment, a portion of the phosphorylated lignin obtained by drying at 50°C was dialyzed given rise to a purified phosphorylated lignin identified in this document as M23 dialyzed.

EXAMPLE 2: Preparation of water-soluble kraft lignin according to the invention (adding a small amount of water (M20))

1.46 g of MAP and 3.33 g of urea were dissolved in 2.66 g of water. Then, 1 g of kraft lignin was added slowly and the suspension was stirred for 20 minutes and, later on, said reaction mixture was heated in a furnace at 150 °C for 60 minutes.

Separation of the phosphorylated lignin: The crude mixture obtained after the phosphorylation process was taken out of the furnace, mixed with 100 mL of water and dissolved by stirring the aqueous mixture for 2 hours. Once dissolution was obtained, the pH of aqueous solution was adjusted to 0.5 with $H_2SO_4$ 2M, the resulting acidic aqueous solution was stirred for 1 hour and, after that, centrifuged at 11,000 rpm for 10 minutes. The supernatant (liquid phase) was discarded and the solid phase comprising the phosphorylated lignin was mixed with 100 mL of water. This process of dissolution-acidification-stirring-centrifugation was repeated 5 times to remove unreacted MAP and urea. The solid phase obtained after these acid treatments was dissolved in 100 mL of water and the pH of the solution thus obtained was adjusted to 7 with NaOH 1 M.

Phosphorylated lignin in solid form was then obtained by drying the said aqueous solution at 50°C in a vacuum oven for 12 hours.

Additionally, with the aim to at least partially remove $Na_2SO_4$ formed in the water washing treatments, the phosphorylated lignin in solid form was dissolved in water at neutral pH and filtrated using an ultrafiltration equipment with a 20kDa membrane. This ultrafiltration process was carried out three times giving rise to the sample identified as M20 in this document.

## EXAMPLE 3: Preparation of water-soluble kraft lignin according to the invention (adding water and drying at 50°C (M28))

1.46 g of MAP and 3.33 g of urea were dissolved in 5.33 g of water. Then, 1 g of kraft lignin was added slowly and the suspension was stirred for 20 minutes. After that, said initial mixture was dried at a temperature of 50°C for 24 h. Then, the dried mixture (i.e., the reaction mixture) was heated in a furnace at 150 °C for 60 minutes.

Separation of the phosphorylated lignin: The crude mixture obtained after the phosphorylation process was taken out of the furnace, mixed with 100 mL of water and dissolved by stirring the aqueous mixture for 2 hours. Once dissolution was obtained, the pH of aqueous solution was adjusted to 0.5 with $H_2SO_4$ 2M, the resulting acidic aqueous solution was stirred for 1 hour and, after that, centrifuged at 11,000 rpm for 10 minutes. The supernatant (liquid phase) was discarded and the solid phase comprising the phosphorylated lignin was mixed with 100 mL of water. This process of dissolution-acidification-stirring-centrifugation was repeated 5 times to remove unreacted MAP and urea. The solid phase obtained after these acid treatments was dissolved in 100 mL of water and the pH of the solution thus obtained was adjusted to 7 with NaOH 1 M.

Phosphorylated lignin in solid form was then obtained by drying the said aqueous solution at 50°C in a vacuum oven for 12 hours.

Additionally, with the aim to at least partially remove $Na_2SO_4$ formed in the water washing treatments, the phosphorylated lignin in solid form was dissolved in water and filtrate using an ultrafiltration equipment with a 20kDa membrane. This ultrafiltration process was carried out three times giving rise to the sample identified as M28 in this document.

## Comparative EXAMPLE 4: Preparation of phosphorylated kraft lignin (M16)

The same procedure of Example 2 was carried out with the proviso that 5.33 g of water were added instead of 2.66 g. The sample obtained is identified as M16 in this document.

## Comparative EXAMPLE 5: Preparation of phosphorylated kraft lignin (M24)

The same procedure of Example 2 was carried out with the proviso that 5.33 g of water were added instead of 2.66 g, and the reaction mixture was heated at 150°C for 120 minutes. The sample obtained is identified as M24 in this document.

In table 1 below, reagent amounts and the phosphorylation conditions (temperature and time) of the above examples have been summarised.

TABLE 1

| Sample | KL (g) | MAP (g) | Urea (g) | Water (g) | Temp. (°C) | Time (min) |
|--------|--------|---------|----------|-----------|------------|------------|
| M1 | Untreated KL (as a reference) | | | | | |
| M16 | 1 | 1.46 | 3.33 | 5.33 | 150 | 60 |
| M24 | 1 | 1.46 | 3.33 | 5.33 | 150 | 120 |
| M20 | 1 | 1.46 | 3.33 | 2.66 | 150 | 60 |
| M23 | 1 | 1.46 | 3.33 | 0 | 150 | 60 |
| M28 | 1 | 1.46 | 3.33 | 5.33[(*)] | 150 | 60 |
| [(*)] Mixture dried at 50°C for 24 h prior to the heating at 150°C | | | | | | |

**Product characterization**

- FTIR

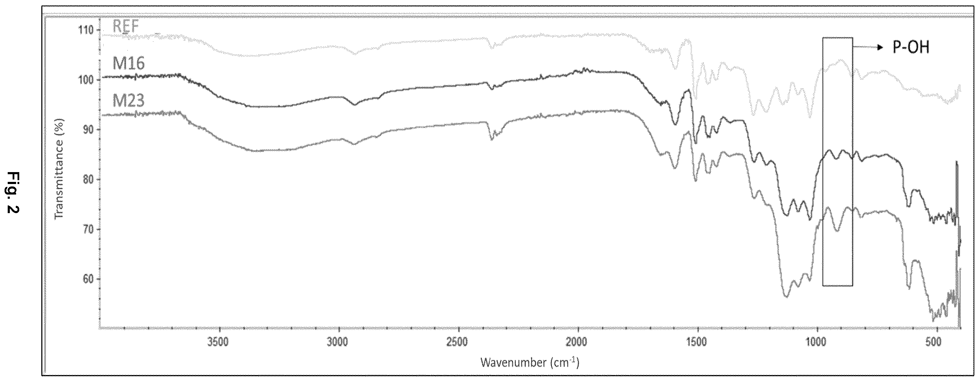

Despite the acid washing treatments, the FTIR spectra (Fig. 2) of phosphorylated lignin obtained in example 1 (M23) and comparative example 4 (M16) clearly showed the P-OH bond characteristic vibration band at 928 cm$^{-1}$, which was not present in the untreated kraft lignin (REF). In the samples of phosphorylated lignin, it was also detected an absorption band about 620 cm$^{-1}$, which was associated with sodium sulphate.

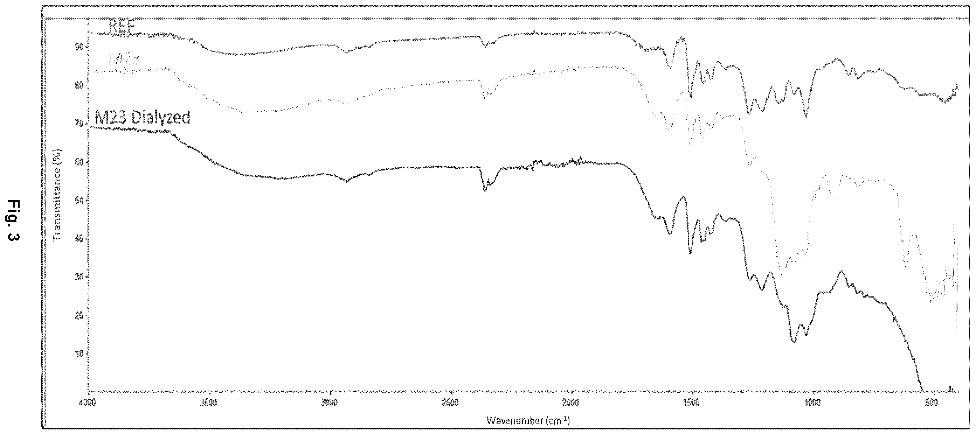

Fig. 3 shows that the sodium sulphate present in the sample obtained in Example 1 (M23) was removed after the dialysis process, since the above-mentioned band at about 620 cm$^{-1}$ disappeared in M23 dialysed.

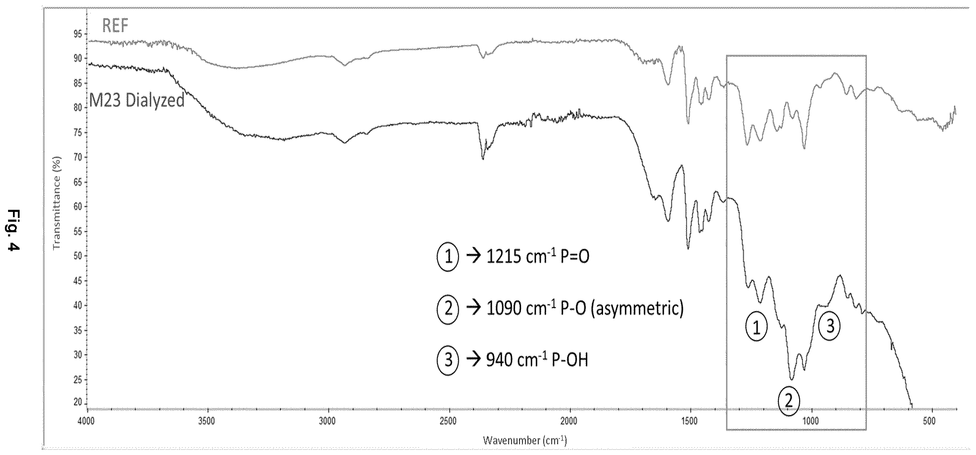

The FTIR spectra of the samples identified as "M23" and "M23 dialysed" also show the vibration of bands which are typically associated to phosphate group. Importantly, these bands were not observed in untreated kraft lignin (Fig. 4). More specifically, the appearance of a very strong band at about 1090 cm$^{-1}$ was associated with the asymmetric stretching of P-O bonds, and the appearance of a very broad band at about 940 cm-1 was associated with the vibration of the P-OH groups. Besides, it was observed a significant growth of the band vibrating at about 1215 cm$^{-1}$, which is due to the vibration of the P=O bond typical of phosphate groups. Therefore, the FTIR analysis prove the presence of phosphate groups in the chemical structure of the kraft lignin obtained by the method according to the invention, even after 5 cycles of water washings at very acidic pH and 3 cycles of ultrafiltration.

- Na$_2$SO$_4$ content

After the ultrafiltration process, the amount of Na$_2$SO$_4$ in each sample was analysed by ionic chromatography. Results are reported in table 2 below (M1 sample corresponds to unmodified kraft lignin):

TABLE 2

| Sample | % KL | % Na$_2$SO$_4$ |
|--------|------|------|
| M1 | 99.38 | 0.62 |
| M16 | 89.38 | 10.62 |
| M24 | 88.05 | 11.95 |
| M20 | 85.20 | 14.80 |
| M23 | 83.16 | 16.84 |
| M28 | 87.29 | 12.71 |

As can be observed in Table 2 above, all the phosphorylated lignin samples had a significant amount of sodium sulfate, even after 3 cycles of ultrafiltration. The source of this salt was the pH increase of the phosphorylated lignin recovered and resuspended in water after each of the water washing treatments (acidification with H$_2$SO$_4$ up to pH 0.5 and centrifugation). Due to this acidification with H$_2$SO$_4$, the accumulation of SO$_4^{2-}$ groups in the phosphorylated lignin was quite significant and, therefore, the addition of NaOH to adjust the pH of the final aqueous solution to 7 gave rise to the formation of a high amount of sodium sulfate.

The high amount of sodium sulfate in the samples of phosphorylated lignin according to the invention suggests a higher amount of phosphate groups. Without being bound by the theory it is believed that the higher the amount of phosphate groups in the phosphorylated lignin, the higher the amount of acid required to precipitate said lignin in the acid washings (pH 0.5), thus resulting in a greater amount of $Na_2SO_4$ after the neutralization with NaOH.

- Solubility determination

The solubility of the phosphorylated lignin in water was determined by a spectrophotometric method. For this purpose, a spectrophotometric scan was made in order to determine the wavelength at which the maximum absorbance occurs (290 nm).

Then, water solutions containing about 2.5 g of lignin/L of the sample to be tested were prepared by slowly adding the required amount of sample to water, sonicating for 10 minutes, stirring for 1 hour and adjusting to different pHs (pH 2, 4, 6, 8, 10 and 12) using 1M NaOH or 1M $H_2SO_4$ solutions. Then, the concentration of each of these solutions were adjusted to about 2.0 g/L with water, stirred for about 30 min and, after that, centrifugated (11,000 rpm for 10 minutes). A portion of 100 $\mu$L of the supernatant was mixed with 2.9 mL of NaOH 0.1 M and the absorbance measured at 290 nm.

The absorbance of each sample was analyzed twice. To quantify the % of solubility, it was considered that all the lignin samples tested (unmodified and phosphorylated) were completely solubilized at pH 12. That means that, for any sample, the maximum absorbance possible was the absorbance of the sample at pH 12. Therefore, for each sample, the solubility at pH 2, pH 4, pH 6, pH 8 and pH 10 was estimated according to the following equation:

% Solubility (pH X) = (Absorbance of the sample at pH X) / (Absorbance of the sample at pH 12), wherein X could 2, 4, 6, 8 or 10.

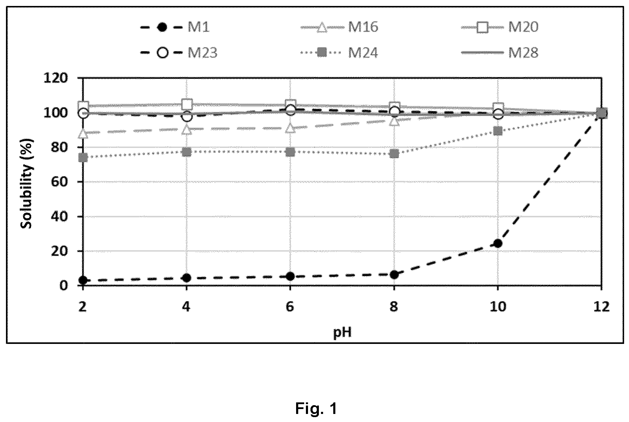

Results of the % of solubility obtained for unmodified kraft lignin (M1), examples 1-3 (M20, M23 and M28), as well as comparative examples 4-5 (M16 and M24) are reported in table 3 below and Figure 1.

TABLE 3

| pH | 2 | 4 | 6 | 8 | 10 | 12 |
|---|---|---|---|---|---|---|
| M1 | 2.98 | 4.30 | 5.16 | 6.29 | 24.37 | 100.00 |
| M16 | 88.36 | 90.68 | 91.26 | 95.74 | 100.10 | 100.00 |
| M24 | 74.17 | 76.50 | 77.41 | 77.29 | 89.55 | 100.00 |
| M20 | 100.81 | 100.01 | 100.60 | 100.41 | 100.59 | 100.00 |
| M23 | 99.87 | 100.08 | 102.12 | 100.98 | 99.75 | 100.00 |
| M28 | 100.02 | 100.49 | 100.97 | 99.00 | 99.13 | 100.00 |

In previously known methods for the phosphorylation of lignin with urea and a phosphorylating agent such as MAP or DAP, water was used to solubilize these reactants. However, the inventors surprisingly found that the phosphorylation of lignin in dry conditions, in particular, without the addition of water for the mixing of the lignin with the reactants or with a water content equal to or less than 3 g of water/ g lignin, is much more effective that the phosphorylation with water. Furthermore, it was found that when the weight ratio of water added for mixing the lignin with the reactants is higher than 3 g/ g lignin, water needs to be evaporated at mild temperatures (i.e., preferably lower than 70 °C, more preferably lower than 55 °C) to avoid the formation of undesired species which lead to produce phosphorylated lignin with a very amount of phosphor and, consequently, with a very low water solubility at neutral/acidic conditions.

Untreated lignin (M1) showed the typical solubility provided of kraft lignin, i.e., practically insoluble at acid and neutral pH and completely soluble at pH 12. The solubility of KL in alkaline pHs is due to the deprotonation of the phenolic groups of the lignin, which typically occurs at pH 10 and above.

As regards to the phosphorylated lignin, the solubility profile depends on the water content present in the reaction mixture (i.e., the mixture which is heated at the curing temperature). Examples provided herein proves that when the phosphorylation reaction took place from a mixture without adding water for mixing the lignin and the reactants or with a reduced and controlled water content (i.e., equal to or less than 3 g $H_2O$/ g KL), the solubility of the phosphorylated lignin was about 100 % in the whole pH range (see samples M20 and M23). However, when a higher amount of water is present in the reaction mixture and no drying process is performed before the phosphorylation reaction, the phosphorylated lignin obtained is not completely soluble at acidic / neutral pHs (see samples M16 and M24).

Without being bound by the theory, it is believed that when a reaction mixture comprising a reduced amount of water is heated at the curing temperature (150 °C in the examples), the temperature of said reaction mixture gradually increase until arriving at the established temperature. However, the presence of a higher amount of water implies that the temperature of said mixture is kept at about 100°C until water is evaporated and, only later on, increase to the established curing temperature. The higher the amount of water, the higher the time that the reaction mixture is at a temperature of about 100 °C.

Taking into account, however, that the amount of water present in the comparative examples 4 and 5 was relatively low (5.33 g $H_2O$/ g lignin) and the curing temperature was established at 150°C, the inventors believe that there might be other reactions limiting or conditioning the phosphorylation of lignin when water is present in an amount higher than 3 g $H_2O$/ g lignin. Time required to evaporate the water present in the reaction mixture should be very short and, therefore, the significant differences in the water solubility cannot only be attributed to said evaporation process.

It was also proved that increasing the reaction time (up to 2 hours in comparative example 5) with the aim to compensate for the time required to evaporate water did not provide suitable results, since the solubility of the phosphorylated lignin obtained in this conditions (M24) at acidic and neutral pH was lower than the one obtained with a reaction time of 1 hour (comparative example 4, M16).

Without being bound by the theory, it is believed that high reaction times may favor condensation reactions (P-OH + OH-P → P-O-P) due to the high reactivity of the phosphate groups, which could reduce the number of phosphate groups capable of providing negative charges and, consequently, favoring the aggregation of lignin in acidic and neutral pHs.

- Degree of phosphorylation

Samples were analyzed by ICP in order to quantify their phosphor content.

For this purpose, the samples to be tested were digested (8 mL $HNO_3$ and 2 ml $H_2O_2$) in a microwave oven at a temperature of 200°C. Then, the phosphor content was analyzed by Inductively coupled plasma - optical emission spectrometer (ICP-OES).

Results obtained for kraft lignin (M1), the product of Gao et al. (not part of the invention), examples 1-3 (M20, M23 and M28), as well as comparative examples 4-5 (M16 and M24) are reported in Figure 2.

These results proved that the phosphor content can be increased by reducing the amount of water in the reaction mixture. Thus, the sample obtained from comparative example 4 (M16, 5.33 g $H_2O$/ g lignin) had a phosphor content of 2.3 %, whereas the phosphor content reported in Gao *et al.* (obtained with the double amount of water) was of 0.95 %. Even more importantly, the phosphor content of examples 1-3 according to the invention (M20, M23 and M28) were about 5 %, which can substantially increase the solubility of kraft lignin in neutral and acidic pH.

It is important to note that the relation between the phosphor content and water solubility at acidic and neutral pH is not always lineal. In particular, sample M24 had a high phosphor content (4.36 %) and a reduced solubility (see above). This result evidence that in order to improve the solubility of KL by phosphorylation is important to fix phosphate groups to the chemical structure of the lignin and, additionally, avoid the condensation of these phosphate groups, so that they can be deprotonated and provide anionic charges to the lignin when solubilized in an aqueous medium.

An important difference between the process described by Gao *et al.* and the method of the present invention is that, in that prior art document, the water solution containing lignin and the reactants was mixed for 1h at 70 °C and dried at 70 °C (the time of the drying process was not provided) to remove water from the reaction prior to the curing process at 150°C; whereas any drying of the reaction mixture (if required) must be done at a temperature lower than 70 °C, more preferably lower than 55 °C in the method according to the invention. The results of example 3 (M28) proved that the phosphorylated kraft lignin thus obtained had a phosphor content and water solubility profile similar to that obtained without adding water (M23, example 1).

Without being bound by the theory, the inventors believe that this negative effect of a high amount of water in the reaction mixture and/or the evaporation of said water at a temperature higher than 70 °C prior to the curing step can be due to the following: First, the solubilization of the phosphorylated agent in the nitrogenated compound may give rise to $NH_4^+$ and $H_2PO_3^-$. Under normal conditions, the ammonium ion ($NH_4^+$) is stable in aqueous solution and does not readily dissociate into other compounds. However, depending on the pH, it can establish an equilibrium with ammonia ($NH_3$) through the reaction: $NH_4^+ \leftrightarrows NH_3 + H^+$. In acidic solutions, the $NH_4^+$ form predominates, whereas in more basic solutions, a greater proportion of $NH_3$ is present. The heating of said dissolution at a temperature higher than 70°C to evaporate water may give rise to the evaporation of $NH_3$ and, consequently, displacing the above-mentioned equilibrium to the decomposition of $NH_4^+$ to $NH_3$.

It is known that the presence of ammonium salts such as $NH_4Cl$ favors the phosphorylation reaction because these salts can limit the decomposition of nitrogenated compounds such as urea and carbamylating reactions at high temperatures. The decomposition of $NH_4^+$ to $NH_3$ during the water evaporation process at temperatures higher than 70°C may jeopardize the phosphorylation reaction of lignin in water.

In the method according to the invention, the nitrogenated compound such as urea can melt at the curing temperature and act as a solvent. Then, the nitrogenated compound may solvate the $PO_3^-$ forming a complex which promotes the phosphorylation reaction. In the presence of a high amount of water, however, $PO_3^-$ is much more instable, in particular at temperatures of 70-100°C, since this functional group can react with said water forming $H_2PO_4^-$. Without being bound by the theory, the inventors believe that this reaction can be produced when water is evaporated during the drying of said mixture at a temperature higher than 70°C or, if the reaction mixture has a water content higher than 3 g/ g lignin, during the heating of said reaction mixture to the cure temperature. The higher the amount of water present in that mixture, the higher the temperature and/or time required to evaporate it and, therefore, the higher the amount of $H_2PO_4^-$ that can be formed by reaction of $PO_3^-$ with water. It is believed that the capability of these $H_2PO_4^-$ groups to react with the OH of the lignin is much lower than the reactivity of $PO_3^-$, thus explaining the lower phosphorylation rate observed in the examples wherein the phosphorylation of lignin took place with a higher amount of water (M16 and M28).

Another factor that may contribute to the outstanding efficacy of the phosphorylation process in the method of the invention is that the formation of phosphate condensed structures such as pyrophosphates ($P_2O_7^{4-}$) is avoided or at least minimized. These condensed structures can be formed from phosphorylated agents such as MAP and/or DAP, and nitrogenated agents such as urea, when they are mixed with water at a temperature of 60-150°C ($PO_3^- + H_2PO_4^- \rightarrow P_2O_7^{4-}$). This condensation can also be favored by the evaporation of water from the reaction mixture, since it gives rise to a concentration of the phosphorylated agent in the mixture.

In the previous art where kraft lignin was phosphorylated with MAP/ DAP, urea and water, the reagents were mixed with water at 70°C for 1 hour and then water was evaporated by drying at 70°C without specifying the time (Gao et al.) or a 100°C for 2.5 hours (Karlsson et al.) prior to the cure process at 150°C. The inventors believe that there is a distinct possibility that a significant amount of condensation reaction took place in the drying processes reported therein, thus reducing the phosphate groups able to react at a cure temperature of 150°C. This theory is reinforced by the phosphorylation rate of the sample M28 (similar to the phosphorylation in "dry" conditions), were the reagents were mixed with water and dried at a temperature of 50°C for 24 hours before the curing step at 150°C. Evaporating water at a temperature lower than 60°C, the above-mentioned condensation reaction among the phosphate groups can be avoided or at least significantly reduced and, therefore, an improved phosphorylation rate can be achieved.

**Claims**

1. A method for manufacturing a phosphorylated lignin, wherein said phosphorylated lignin is water-soluble, in particular at a pH of 2 to 14, and the method comprises the following steps:

   a) providing a reaction mixture comprising lignin, a phosphorylating agent, a nitrogenated compound, and optionally water, wherein:

   - the weight ratio between the phosphorylating agent and the lignin is higher than 0.5, preferably equal to or higher than 1;
   - the weight ratio between the nitrogenated compound and the lignin is higher than 0.5, preferably equal to or higher than 2; and
   - the water content of the reaction mixture is equal to or lower than 3 g/ g lignin; and

   b) heating the reaction mixture at a temperature higher than 100 °C, preferably higher than 132 °C, thereby obtaining a crude mixture comprising water-soluble phosphorylated lignin.

2. The method of claim 1, wherein it further comprises the following steps:

   c) preparing an aqueous solution by dissolving the crude mixture comprising water-soluble phosphorylated lignin obtained in step b) into water, wherein the concentration of the crude mixture is of 0.5 wt.% to 50 wt.%, percentage referred to the weight of the crude mixture with respect to the weight of the aqueous solution;
   d) if required, adjusting the pH of the aqueous solution of step c) at a pH of 5 to 12 with an alkaline compound, preferably sodium hydroxide; and
   e) optionally isolating the water-soluble phosphorylated lignin in solid form; preferably the isolation comprises drying the aqueous solution of step d) at a temperature lower than 100°C, preferably lower than 70°C.

3. The method of claim 1 or claim 2, wherein step a) comprises:

   a-1) mixing the lignin, the phosphorylating agent, the nitrogenated compound and, optionally, water at a temperature lower than 60 °C, preferably lower than 55 °C, thereby obtaining an initial mixture; and
   a-2) drying the initial mixture at a temperature lower than 60°C, thereby obtaining a reaction mixture with a water content equal to or lower than 3 g/ g lignin.

4. The method of claim 1 or claim 2, wherein step a) comprises mixing the lignin, the phosphorylating agent and the nitrogenated compound, thereby obtaining a reaction mixture with a water content equal to or lower than 3 g/ g lignin.

5. The method of any one of claims 1 to 4, wherein the lignin is kraft lignin.

6. The method of any one of claims 1 to 5, wherein the phosphorylating agent is selected from monoammonium phosphate (MAP), diammonium phosphate (DAP) and a combination thereof.

7. The method of any one of claims 1 to 6, wherein the weight ratio between the phosphorylating agent and the lignin is of 1 to 5, preferably of 1 to 2.

8. The method of any one of claims 1 to 7, wherein the nitrogenated compound is urea.

9. The method of any one of claims 1 to 8, wherein the weight ratio between the nitrogenated compound and the lignin is of 2 to 10, preferably of 2 to 6.

10. The method of any one of claims 1 to 9, wherein step b) comprises heating the reaction mixture of step a) at a temperature higher than 132 °C to 175 °C, preferably of 145 °C to 170 °C, for a period of 10 minutes to 90 minutes, preferably of 25 minutes to 75 minutes.

11. The method of any one of claims 1 to 10, wherein said method comprises the following:

c) preparing an aqueous solution by dissolving the crude mixture comprising water-soluble phosphorylated lignin obtained in step b) into water, wherein the concentration of the crude mixture is of 0.5 wt.% to 50 wt.%, percentage referred to the weight of the crude mixture with respect to the weight of the aqueous solution;
d) if required, adjusting the pH of the aqueous solution of step c) at a pH of 5 to 12 with an alkaline compound, preferably sodium hydroxide;
d-1) concentrating the aqueous solution of step c) or, if applicable, step d) using ultrafiltration with a 1kDa to 30 kDa membrane, dialysis or osmosis; and
e) optionally isolating the water-soluble phosphorylated lignin in solid form by drying the concentrate phase of step d-1) at a temperature lower than 100°C, preferably lower than 70°C.

12. The method of any one of claims 1 to 10, wherein said method comprises the following:

c) preparing an aqueous solution by dissolving the crude mixture comprising water-soluble phosphorylated lignin of step b) into water, wherein the concentration of the crude mixture is of 0.5 wt.% to 50 wt.%, percentage referred to the weight of the crude mixture with respect to the weight of the aqueous solution;
c-1) adjusting the pH of the aqueous solution of step c) to a pH lower than 2 with an acid compound, preferably sulphuric acid, at a temperature of 10 °C to 70 °C, thereby obtaining an acidic solution;
c-2) stirring the acidic solution of step c-1) for at least 1 hour at a temperature of 10 °C to 70 °C, and separating the solid/liquid phases thereby obtained;
c-3) preparing a further aqueous solution by dissolving the solid phase of step c-2) into water, wherein the concentration of the solid phase is of 0.5 wt.% to 50 wt.%, percentage referred to the weight of the solid phase with respect to the wight of the further aqueous solution;
d) adjusting the pH of the further aqueous solution of step c-3) at a pH of 5 to 12 with an alkaline compound, preferably sodium hydroxide; and
e) optionally isolating the water-soluble phosphorylated lignin in solid form; preferably the isolation comprises drying the aqueous solution of step d) at a temperature lower than 100°C, preferably lower than 70°C.

13. The method of claim 12, wherein steps c-1) to c-3) are repeated n times, n being an integer equal to or higher than 2, preferably an integer equal to or higher than 5, more preferably n is 5.

14. A phosphorylated lignin which is water-soluble at a pH range of 2 to 14.

15. The phosphorylated lignin of claim 14 which is obtained or obtainable by the method as defined in any one of the claims 1 to 13.

Fig. 1

Fig. 2

Fig. 3

Fig. 4

Fig. 5

**EUROPEAN SEARCH REPORT**

Application Number

EP 24 38 3420

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | Karlsson Olav ET AL: "Phosphorylation of Kraft lignin to be used as a water-stable fire retardant in wood", ECWM10, 26 April 2022 (2022-04-26), pages 1-8, XP093276473, Retrieved from the Internet: URL:https://batavia.internal.epo.org/citenpl/prod/web/citenpl/citenpl.html?dossierId=3114262&dossierNumber=EP24383420&drawerId=TRI * abstract; page 375, para.2-3; page 376, para.1 * | 1-15 | INV. C08H7/00 C08L97/00 |
| A,D | GAO CONG ET AL: "Phosphorylated kraft lignin with improved thermal stability", INTERNATIONAL JOURNAL OF BIOLOGICAL MACROMOLECULES, ELSEVIER BV, NL, vol. 162, 12 August 2020 (2020-08-12), pages 1642-1652, XP086280722, ISSN: 0141-8130, DOI: 10.1016/J.IJBIOMAC.2020.08.088 [retrieved on 2020-08-12] * abstract; paragraphs 2.2 and 4; table 1 * | 1-15 | |

TECHNICAL FIELDS
SEARCHED (IPC)

C08H
C08L

The present search report has been drawn up for all claims

| Place of search | Date of completion of the search | Examiner |
|---|---|---|
| Munich | 12 May 2025 | Pellegrini, Paolo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CHOI C.S.** ; **2019 et al.** Preparation of lignosulfonates from kraft lignin by sulfonation. *Journal of Korea TAPPI*, vol. 51 (6), 59-67
- **GAO W. et al.** Sulfonation of phenolated kraft lignin to produce water-soluble products. *Journal of Wood Chemistry and Technology*, 2019, vol. 0, 1-17
- **INWOOD J.P.W. et al.** Production of sulfur containing Kraft lignin products. *BioResources*, 2018, vol. 13 (1), 53-70
- **BYKOV, G.L. et al.** A sorbent based on phosphorylated lignin. *Russian Journal of Applied Chemistry*, 2010, vol. 83 (2), 316-319
- **ALALYKIN, R.L. et al.** Preparation of modified hydrolysis lignin and its use for filling epoxy polymers and enhancing their flame resistance. *Russian Journal of Applied Chemistry*, 2011, vol. 84 (9), 1567-1574
- **GAO, C. et al.** Phosphorylated kraft lignin with improved thermal stability. *International Journal of Biological Macromolecules*, 2020, vol. 162, 1642-1652
- **KARLSSON, O. et al.** Phosphorylation of kraft lignin to be used as water-stable fire retardant in wood. *Tenth European Conference on Wood Modification*, 2022, 374-377